# EUROPEAN PATENT APPLICATION

(11) **EP 2 355 467 A2**
(43) Date of publication of application: **10.08.2011**
(21) Application number: 11152350.2
(22) Date of filing: 27.01.2011
(51) Int. Cl.: H04M 1/60, B60R 16/023, G01C 21/36

(54) **Mobile phone integration into driver information systems**

(30) Priority: 27.01.2010 US 694459
(71) Applicant: Robert Bosch GmbH, 70442 Stuttgart (DE)
(72) Inventor: Faenger, Jens, Santa Clara, CA 95054 (US); Schmidt, Hauke, Menlo Park, CA 94025 (US)
(74) Representative: Barth, Stephan Manuel

(57) **Abstract**

A method of operating a driver information system includes communicatively coupling a personal electronics device (202) to the driver information system.
A selection of an application of the driver information system is received from a user. The user makes input using the car's input devices, and the input is transformed to match the input capabilities of the personal electronics device (202). Data is transmitted from the application to the personal electronics device (202). The data is processed within the personal electronics device (202). A result of the processing is transmitted from the personal electronics device (202) to the driver information system. Information is presented to the user via the driver information system dependent upon the result of the processing.

## Description

### BACKGROUND OF THE INVENTION

### 1. Field of the Invention.

The present invention relates to driver information systems, and, more particularly, to driver information systems used in conjunction with mobile phones.

### 2. Description of the Related Art.

State of the art driver information systems are known to connect to mobile phones via wireless or wired connections. Such connections can be used to initiate phone calls from the driver information system. The mobile phone can place the call and transmit the audio back to the driver information system, which in turn can play the audio on the speakers of the car.

In addition, the driver information system can access databases that are stored on the mobile phone, such as the phone's contact list, mp3 collections, etc. But, in order to use this data from the mobile phone, the driver information system has to provide an application that is capable of using the data. For example, a music player is required in order to play music files, or an email program is required in order to use the email contact database. No general purpose access to all applications in the mobile phone from the car is available. Every application of the mobile phone that is supposed to be used from the driver information system has to replicated, i.e., recreated, specifically for the driver information system.

The benefit of recreating applications in the driver information system is that the applications can be specifically adapted to the car environment. For example, functionality can be reduced or limited, or the user interface of the application can be changed to be specifically targeted to the input controllers in the car. Applications in the mobile phone are not designed with use in the car in mind. Thus, such applications do not consider that the driver has to divert his attention from the driving task when operating the applications on the phone.

Nokia's remote control described in WO-2006067541 A1 is a phone remote control designed for the car environment. Nokia's invention is tightly integrated with a limited amount of functions of the phone. Only applications that were specifically designed with this technology in mind are able to make use of the remote controller functionality. Nokia's invention does not teach how to control an unlimited number of third party applications running on the phone or phones that were not built with this extension in mind.

State of the art technologies such as X Windows, Remote Desktop Protocol, and Virtual Network Computing make it possible to transmit the display content of one computer to another and enable remote control of any application that is running on the display-transmitting computer. A solution based on the same technology but specifically targeted towards mobile phones is Celio Technology Corporation's Redfly. Redfly transmits the phone's screen content to a portable terminal consisting of an external screen, keyboard and touchpad. In addition, the Redfly system increases the screen resolution of the phone to match the resolution of the external display. This allows phone applications to display more content on the external screen. All of the above-mentioned solutions transmit just the unmodified screen content to the screen of another device. Apart from a simple scaling or rotation operation, no content adjustment is performed. Advanced operations such as rearranging the screen or application layout or even filtering content to support a driver are not performed. Furthermore, none of the existing technologies teach how to integrate output from applications of the remote controlled computer to match the graphical representation of applications running on the controlling computer. In addition, user input on the controlling computer is simply sent back to the remote controlled device, and thus a simple 1:1 mapping is applied. That means compatible input devices, such as a mouse, must exist on both the remote controlled computer and the controlling computer.

State of the art technologies such as Johnson Controls' Bluetooth Mobile Device Gateway make it possible to transmit sensor information from the car to a portable navigation system which is connected using Bluetooth or USB. The portable navigation system processes the information and displays output on its own screen and loudspeaker. This technology is not intended for making the portable navigation system a "computing resource" for the car, as the results of the processing stays within the portable navigation system. Especially, the portable navigation is not intended to complement functionality offered by a driver information system available in the car. As an example, both the driver information system in the car and the portable navigation system have the ability to display a navigation map. There is no option of sharing the rendered map between the driver information system and the portable navigation system.

What is neither disclosed nor suggested by the prior art is a driver information system that uses the processing power and applications of a mobile phone to enhance the functionality of the driver information system.

### SUMMARY OF THE INVENTION

The present invention may provide an automotive driver information system that uses processing power and applications running on mobile phones to extend its own functionality. Thus, the invention makes it possible for identical applications to be provided on both the driver information system and the mobile phone, and for applications that run on the mobile phone to be operated from the driver information system with the car's available input and output devices. This allows the driver information system to benefit from the vast amount of applications available on mobile phones. In order to minimize distraction from the driving task, the driver information system may filter and limit the content from the mobile phone. In addition, the driver information system can benefit from the fast paced growth in computing and graphics power of mobile phones. By connecting the driver information system to the mobile phone, the invention enables the user to upgrade his driver information system with "pluggable" computing power which may be used to improve existing functionality or to add new functions to existing applications.

The invention may extend the functionality of both a mobile phone and a driver information system in the car. For example, the mobile phone may display its output on the car's output devices. On the other hand, the user may provide inputs by utilizing the user interface built into the car. The car's user interface may also be used to operate a mobile phone. Both input and output operations may modify the content in order to translate between the different capabilities of the phone and the driver information system. The introduced modifications may support the driver in using the mobile phone while driving and minimize the potential distraction of using the mobile phone.

In one embodiment, the invention enables the driver information system to use the mobile phone for extensive computation or rendering of graphics. This feature may be especially beneficial if the mobile phone provides better computing and graphics performance than does the driver information system. The results of those computations may then be used by the driver information system.

The invention comprises, in one form thereof, a method of operating a driver information system including communicatively coupling a personal electronics device to the driver information system. A selection of an application of the driver information system is received from a user. Data is transmitted from the application to the personal electronics device. The data is processed within the personal electronics device. A result of the processing is transmitted from the personal electronics device to the driver information system. Information is presented to the user via the driver information system dependent upon the result of the processing.

The invention comprises, in another form thereof, a method of presenting audio/video content to a user, including transmitting audio/video content from a personal electronics device to a driver information system. The audio/video content is transformed to match at least one parameter of the driver information system. A maximum amount of the transformed audio/video content that may be safely presented to the driver on the driver information system without unduly distracting the driver from a driving task is determined. The maximum amount of the transformed audio/video content is presented to the user via the driver information system.

The invention comprises, in yet another form thereof, a method of presenting video content to a user, including communicatively coupling a personal electronics device to a driver information system within a vehicle. Output from a video sensor within the vehicle is transmitted to the personal electronics device. The output from the video sensor is processed within the personal electronics device. Video content is produced within an application of the personal electronics device. The produced video content is dependent upon the processed video sensor output. The produced video content is transmitted from the personal electronics device to the driver information system. The produced video content is presented to the user via the driver information system.

The invention comprises, in still another form thereof, a method of operating a driver information system, including receiving a selection from a user of an application of the driver information system. It is determined whether a personal electronics device is coupled to the driver information system. If it is determined that a personal electronics device is coupled to the driver information system, then data is transmitted from the application to the personal electronics device; the data is processed within the personal electronics device; and a result of the processing is transmitted from the personal electronics device to the driver information system. If it is determined that a personal electronics device is not coupled to the driver information system, then the data is processed within the driver information system. The information is presented to the user via the driver information system dependent upon the result of the processing.

### BRIEF DESCRIPTION OF THE DRAWINGS

The above mentioned and other features and objects of this invention, and the manner of attaining them, will become more apparent and the invention itself will be better understood by reference to the following description of embodiments of the invention taken in conjunction with the accompanying drawings, wherein:
FIG. 1 is a flow chart illustrating one embodiment of a mobile phone integration method of the present invention.
FIG. 2 is an illustration of displaying a mobile phone application on an in-vehicle display screen according to one embodiment of the present invention.
FIG. 3 is an illustration of one embodiment of a method of the present invention of using a phone to increase the capabilities of an in-car system.
FIG. 4 is a flow chart illustrating one embodiment of a method of operating a driver information system of the present invention.
FIG. 5 is a flow chart illustrating one embodiment of a method of presenting audio/video content to a user according to the present invention.
FIG. 6 is a flow chart illustrating one embodiment of a method of presenting video content to a user according to the present invention.

[0017] Corresponding reference characters indicate corresponding parts throughout the several views. Although the exemplification set out herein illustrates embodiments of the invention, in several forms, the embodiments disclosed below are not intended to be exhaustive or to be construed as limiting the scope of the invention to the precise forms disclosed.

### DESCRIPTION OF THE PRESENT INVENTION

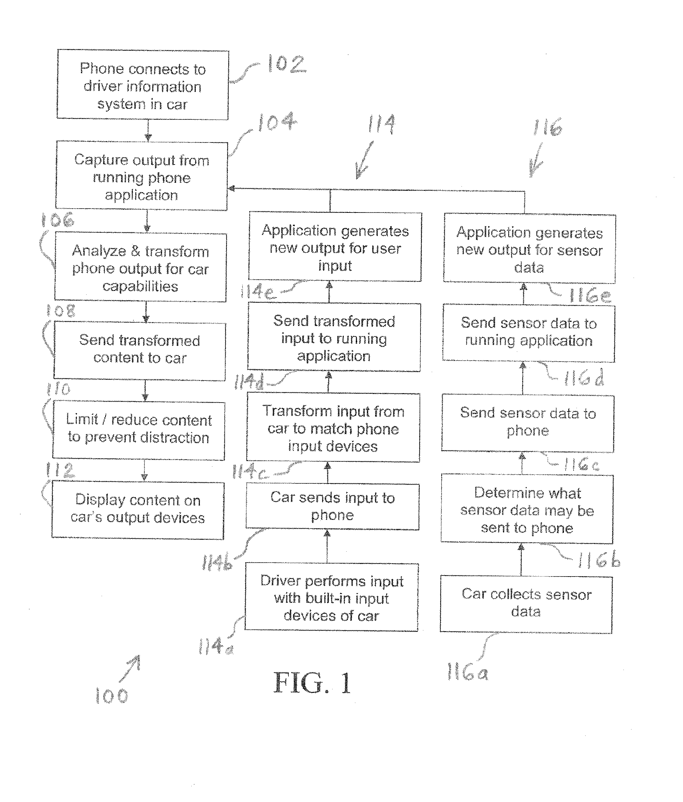

Referring now to the drawings, and particularly to FIG. 1, there is shown one embodiment of a mobile phone integration method 100 of the present invention. In a first step 102, the mobile phone is communicatively coupled to the driver information system in the vehicle, by either wired or wireless means. Output from a running phone application may be captured, analyzed and transformed so as to be compatible with the capabilities of the car's driver information system (steps 104 and 106). The transformed content may be transmitted to the car, with the transmitted content being limited or reduced in order to reduce driver distraction in interpreting the content (steps 108 and 110). In step 112, the transmitted content is displayed on the output portions of the user interface of the vehicle.

The output from the running phone application in step 104 may originate within an application within the mobile phone. Alternatively, the output from the running phone application in step 104 may be produced in response to inputs originating in the vehicle, as in steps 114 and in steps 116. More particularly, in steps 114, the driver may provide inputs by use of the user interface of the vehicle, and the driver information system may transmit these inputs to the mobile phone. Similarly to step 106, the inputs from the car may be analyzed and transformed to match the capabilities of the phone input devices. Such transformed inputs may be transmitted to the phone's running application, and the application may generate new output in response to the user input. The application's output is then captured in step 104 and the process of steps 106, 108, 110 and 112 may be repeated.

In steps 116, the vehicle collects sensor data, which could be video, audio, temperature data, etc. A portion of the sensor data appropriate for processing within the phone may be transmitted to a running application within the phone. The application may then process the sensor data and generate new output in response thereto. The application's output is then captured in step 104 and the process of steps 106, 108, 110 and 112 may be repeated.

The mobile phone may be connected to the driver information system with a wireless or wired data connection, such as USB, Wi-Fi or Bluetooth. In one embodiment, authentication between the mobile phone and the driver information system is used to ensure that only devices that are well known to each other can access each other. For this purpose, a pairing between both devices is called for when a connection is established for the first time.

As described above with reference to step 104, outputting a mobile phone's content on a car's output devices may include capturing output from a running phone application. After the connection between the phone and the car has been established, the phone may begin exchanging data with the driver information system. For this purpose, content may be captured that is normally output on the phone's display screen, the phone's loudspeaker or on other available output channels of the phone, such as a haptic display or a channel employing force feedback.

In order to capture the output of the phone, a variety of technologies may be employed within the scope of the invention. As a first example, the complete output of the screen and the complete audio output may be captured and/or recorded using available physical connectors. For this purpose, video and audio output connectors of the phone may be used if they are available.

In a second example of capturing phone output, the complete output of the screen and the complete audio output may be captured and/or recorded using a component running inside the phone. This component may periodically read the content of the screen and check for changes. This approach may employ technologies such as Virtual Network Computing.

As a third example of capturing phone output, graphics and audio instructions may be captured and/or recorded. This approach calls for a component on the phone that is able to record all instructions that generate output on the graphics system and the audio system of the phone, such as "draw line", "show text", "display dialog window" or "play audio sample". Thus, every graphics and audio command initiated on the phone may be registered. In contrast to the above-described approaches, this approach may not capture the "results," e.g., may not draw operations on the screen, but instead may capture the instructions that lead to the results. This approach may employ technologies such as X Windows and Remote Desktop Protocol. This approach may also provide support for additional output modalities such as vibration and other tactile and force feedback.

As a fourth example of capturing phone output, in addition to recording low level instructions to draw on the screen or output audibly, calls to higher level phone functions may also be registered. For example, some phones provide the option of notifying applications about incoming messages, such as email, text messages or phone calls. Such notification options may be used, and additional usage information may be collected from the phone. If an application displays an information or warning dialog accompanied with a sound on the speaker, this instruction may be registered as well. Another example is recording usage of the phone's text-to-speech system. Thus, the text that results in an audio output may be determined and recorded, rather than the audio output itself. Another example of capturing phone output may use the so-called "accessibility functionality" that is provided by some phones. Accessibility functionality is normally used to read text on the screen to visually impaired users. The system of the invention may use the same technology to learn what is displayed on the screen and to record the output.

As a fifth example of capturing phone output, the phone operating system itself may be extended to better integrate the above-mentioned technologies and to develop a deeper understanding of what applications are currently doing.

As a sixth example of capturing phone output, on some phones that prevent all the other approaches, individual applications may be extended with the ability to communicate with a car. In this case, all the previously described technology options may be integrated into individual applications. While this approach may not allow transparent integration with existing phone applications, it makes it possible to have a very deep integration of specific applications with the car.

As described above with reference to step 106, outputting a mobile phone's content on a car's output devices may also include analyzing and transforming phone output to suit the capabilities of the car. After capturing the output from the phone, the output may be transformed and analyzed to determine what the content of the output is. The rationale behind applying a transformation is that the output devices on a phone may differ from the output devices in the car. For example, the physical size of the phone display screen may be smaller than the display screen in the car. In addition, the screen resolution and the aspect ratio may be different in the car than on the phone. By applying a transformation to the content, the output of the phone may be matched to the specifics of the output devices in the car, such as by scaling content or changing the aspect ratio. For this purpose, the driver information system may communicate the available output devices and their characteristics to the phone.

The transformation may enable the phone output to be better integrated into the car environment. For example, font sizes or colors of the output may be adjusted to make it easier for the driver to read the content. The layout of elements displayed may be rearranged, or elements may be removed, to highlight important information and remove less important information.

A modification of the content or its layout calls for a lot of information about the content itself. A variety of different approaches may be used to obtain such information. As a first example, graphics and audio instructions may be analyzed. The information retrieved from capturing the instructions that create the output makes it possible to determine, for example, what shapes and text are drawn on the screen, what type of audio is output on the phone's speaker, and how the phone is vibrating. In combination with additional information resulting from capturing higher level phone functions, such as usage of text-to-speech or display of dialogs with warnings or notifications, meaning may be added to the output that was recorded.

In one embodiment, the system of the invention relies on application profiles to change the content and its layout. In this embodiment, for each known application a description file exists that tells the system how to modify particular content if the invention detects it. For example, if the system detects that a specific application window is shown, it will consult the application's description file to see how the size of that window needs to be modified and how the text that is displayed in the window needs to be rearranged. The same approach is being used to add semantics to the output. If, for example, the application on the mobile phone draws images in a particular window, the system can consult the application description file to find out what the purpose of these images is. For example, the system can find out whether the images visualize buttons, icons, or just static graphic without further meaning.

As a second example of how to obtain information about the content, the content may be analyzed using image processing and/or audio processing. In case no graphics and audio instructions are available to reconstruct the content, an alternative approach may be used. Namely, technologies such as Optical Character Recognition may be employed to find all the texts displayed on the screen; image analysis may be employed to determine what elements and shapes are displayed on the screen; voice recognition may be employed to convert audio into text; and audio analysis may be employed to decide what kind of audio is currently playing (e.g., music, commercials, speech, type of music, etc.).

In a third example of how to obtain information about the content, additional meta-data may be added to the content. The meta-data may include information such as the names of running applications that produced the output, whether the output on the phone was generated as a direct result of user input or user interaction, or whether the phone itself initiated the output.

As described above with reference to step 108, outputting a mobile phone's content on a car's output devices may also include sending transformed content to the car. Once the transformation and content analysis has been performed, all the acquired information may be transmitted to the driver information system in the car. The transmitted information may include the transformed phone output, the higher level description of the phone content and its meaning.

In one embodiment of step 108, the content and its meaning is transferred from the mobile phone to the car using the standardized HTML format. This embodiment allows the car to view the phone's output using a web browser.

As described above with reference to step 110, outputting a mobile phone's content on a car's output devices may also include limiting and/or reducing content to reduce driver distraction. The driver information system may perform additional processing of the content. In contrast to the transformation step performed on the phone, which mainly rearranges or adjusts the content, this step may decide whether the content will be actually presented to the driver. Thus, driver distraction may be prevented.

According to one embodiment, a set of rules may be applied in making the decision about what is to be presented to the driver. One such rule may be to limit the frequency of content updates from phone. The car may check how often the phone tries to output information and may limit how often the phone outputs information. This strategy may prevent, for example, frequent displaying of video during driving. This strategy may be realized without a lot of information about the content by assessing the frequency of content transmissions from the phone. In another embodiment, the content that is to be displayed may be inspected to determine what is to be displayed and, for example, to allow minor updates to existing content but to prevent major updates.

Another rule that may be applied in making the decision about what is to be presented to the driver is to limit the output to content that is relevant. The results of the content analysis may be used to determine what kind of application is trying to output content (e.g., email application, games, etc.) and what kind of content is to be output (warning, information, message, entertainment, etc.). This rule may be used to allow only driving-related applications and driving-related content to be provided during driving. This may prevent output that could unduly distract the driver while he is driving. For example, the playing of a game could be disabled while driving.

Yet another rule that may be applied in making the decision about what is to be presented to the driver is to delay or suppress output. If the system of the invention decides that specific content is not relevant enough to be presented to the driver, then the system has the option of delaying or suppressing the output. If the output is to be delayed, then the output may be stored in a temporary buffer. This additional, less relevant portion of the content output may be presented at a second time that is later than a first time at which the more relevant content is presented to the user. The second time may be after it is determined that a traffic volume has decreased, such as by use of a video sensor within the vehicle.

As described above with reference to step 112, outputting a mobile phone's content on a car's output devices may also include displaying the content on the car's output devices. The content that passes the previous filtering step 110 may then be output on the devices available in the car. These devices may include a display screen, the audio system and additional devices such as haptic output devices on the steering wheel or the driver seat.

Within the scope of the invention, it may be decided which output devices to use. This decision may be based on the content as well as on the current context (e.g., traffic situation, driver situation, etc.). Depending on both criteria, it may be decided which output modality (e.g., visual, verbal, non-verbal, haptic, etc.) is best suited for the content presentation in the current situation. For example, in situations that require a lot of visual attention on the street, information may be presented only acoustically using verbal or non-verbal output. The results of the content analysis process may be used to make this decision. In addition, the system of the invention may have the option of using a dialog to "guide" the user through the content presentation. For example, if the system decides to use a verbal presentation, then the system might first inform the user about the available content and then ask the user if he wants to listen to the available content. The system may play the audio content only if the user accepts that suggestion.

If several devices of the same modality are available, such as several display screens (e.g., display screens on the instrument cluster, center console, head-up display, and rear seat, etc.), the system may also rely on the results of the content analysis process to choose the most appropriate. For example, video content related to a game may be displayed on only the rear seat display screen.

Within the scope of the invention, and as shown in steps 114, it is also possible for the driver to use the available input devices in the car to remotely control the mobile phone. This may be advantageous in that the driver may not need to hold the phone in his hand, and may instead use the more appropriate, convenient, and easily used devices in the car which may be specifically designed and positioned to enable driver input while driving.

As shown in step 114a, the driver may perform input by use of built-in input devices of the car. For this purpose, activity on all appropriate input devices in the car may be registered. Such input devices may include buttons, rotary dials, touch screens, microphones and other input controllers.

As shown in step 114b, the car may transmit the received inputs to the phone. When input takes place on one of those devices, the inputted information may be sent to the phone. In order to reduce data volume, data compression may be employed. In addition, transmission of input from devices whose data cannot be handled by the phone may be restricted. For example, if the phone cannot handle voice input in any way, then voice-based input data may not be sent.

As shown in step 114c, input from the car may be transformed to match the phone input devices. After receiving the input from the car, the phone may process the input. This processing step may be called for in order to transform input from incompatible input devices to input that is compatible with the phone. For example, if the car is using a rotary dial for input but the phone is using a touch screen, the transformation step may translate selection of screen elements that are input by use of the dial into pointing operations on the screen at the position of the element selected. The transformation may also take into account the previous transformation of phone output to match the car's capabilities. The driver may make his input based upon what is displayed on the output devices in the car. Since this output might have been transformed in the output transformation step explained above (e.g., elements are adjusted in size, layout is rearranged, elements are removed, etc.), the transformation of the input may compensate for that transformation in order to make correct input into the phone.

As shown in step 114d, transformed input may be transmitted to the running application. Once the input has been transformed, the transformed input may then be forwarded to the application on the phone.

As shown in step 114e, the application may generate new output for user input. Based on the new input, the application on the phone may generate new output, which, in turn, may be sent to the car again, starting a new cycle.

As shown in steps 116, computations may be outsourced from the driver information system to the mobile phone. In addition to transmitting input/output between the car and applications that run on the mobile phone, the mobile phone may also be used for computing purposes. This feature may take advantage of the fact that new mobile phone generations are introduced into the market in short cycles of about a couple years, whereas driver information systems have a lifetime of more than 10 years. Thus, a state of the art mobile phone may easily outperform a driver information system that is a few years old. But, in contrast to replacing an aged phone, most drivers do not replace their built-in driver information systems unless they buy a new car. This may be true for reasons of cost, convenience, aesthetics, or just because no feasible solution exists.

According to the invention, the capabilities of the driver information system may be combined with the processing power of modem mobile phones. The driver information system may be upgraded with "pluggable" computing power which may be used to improve existing functionality of the driver information system or add new functions into existing applications running on the driver information system. Thus, the applications on the driver information system may be designed to function with and without a mobile phone being connected. When no phone is connected, the applications on the driver information system may provide their basic functionality. However, if a phone with a designated computing component/application is connected to the driver information system, then the applications on the driver information system can make use of the additional resources.

As shown in step 116a, the car may collect sensor data. After the connection between the phone and the driver information system has been established, it may be determined whether the phone provides the necessary computing application/component and if any application is running on the driver information system that is capable and in need of outsourcing computing tasks to the mobile phone. For example, if the navigation map is displayed on the screen and the navigation application is capable of outsourcing the map rendering to the phone, the system of the invention may check whether the phone provides a map rendering application. The system may then collect all sensor data that is required for generating the map. Sensor data that might be collected includes GPS data, radar sensor data, video sensor data, and other relevant sensor information available in the car.

As shown in step 116b, it may be determined what sensor data may be sent to the phone. While the system of the invention may be able to collect a range of sensor data, the system may not necessarily send all that information to the phone. For reasons of security and privacy, the system may decide on a case-by-case basis which information is sent to the computing application running on the phone and which is not sent. For this purpose, the system may call for computing applications on the phone to authenticate themselves against the driver information system using cryptographic certificates. Those certificates may not only determine whether a phone application gets access to the sensor data in the car, but also may determine what type of sensor information may be used.

As shown in step 116c, the granted sensor data may be transmitted to the phone. Depending upon the type of sensor information, the data may be compressed and encrypted. For example, video streams from car cameras may need to be compressed in order to reduce the data volume and to reduce the bandwidth required for transmission.

As shown in step 116d, the sensor data may be transmitted to a running application within the phone. The phone may receive the sensor data and then forward it to the computing application that requested the sensor information. The system of the invention may ensure that this application is available and still running on the mobile phone. If the application or component is no longer running on the phone, then the system may try to restart the application. If the restarting of the application fails, then the system may inform the driver information system. In turn, the driver information system may revert back to using a built-in functionality, such as rendering a simpler map.

As shown in step 116e, the application may generate new output for sensor data. The computing application may decompress and decrypt the sensor data if called for. The computing application may then start to generate new content based on the sensor information provided by the car. For this purpose, the phone's processor, graphics card, built-in sensors, and internet connection or other resources and devices accessible to the phone may be used. The content that is generated may depend upon the purpose of the application. For example, the map application may generate a new map image that represents the current position of the car. The generated content might include images, video sequences, audio data or other content, which is then sent back to the driver information system for output, i.e., for presentation, to the driver. But the generated content may also include intermediate results which are sent back to the driver information system, then post-processed by the application on the driver information system, and only then output on the car's devices.

An advantage of the invention is that it may make minimal extensions to the driver information system and may still do most of the processing on the phone. Since the user may change phones more frequently than he changes cars, performing most or all the processing and updates on the phone may promote long term compatibility with the slower changing car environment.

In another embodiment of the invention, most of the decision making may be moved from the phone into the car. Particularly, the components that analyze and transform output and input may be moved from the phone into the car. In this alternative scenario, those components that analyze and transform output and input may run in the driver information system. The rationale for this arrangement may be that the driver information system may be a "trusted" and controlled environment, whereas the phone may be less trustworthy. In this scenario, all the content transformation and analysis as well as the input transformation may take place in the car instead of in the phone. In addition, this arrangement may provide the driver information system with greater control over how to modify the content in order to integrate it with content produced by other applications running in the driver information system.

The invention may include a system that transmits/transforms input from the car to the phone, transmits/transforms content from the phone back to the car, and outsources computation tasks to the phone. However, it is also possible for the invention to include a system that employs only one or two of these features.

In an example use case, phone applications and an internet connection may be accessed with the in-car system. Assume a user wants to use her mobile phone while she is driving in her car. Her car has a phone interface of the present invention that may enable her to integrate the phone into the driver information system. Accordingly, she may download an integration application of the invention and install it on her mobile phone. She may start the application and the mobile phone may connect with the car. The car may then display a new menu with applications that are available on her phone. Assume that the user selects the TWITTER application, and the application is then started. The application may run on the phone and use the phone's internet connection. The output may be transformed so that the output fits on, and is accommodated by, the display screen of her car. Using the built-in screen and available buttons, switches and/or dials of the car, she is able to use the application. Advantageously, she does not have to hold her mobile phone while driving.

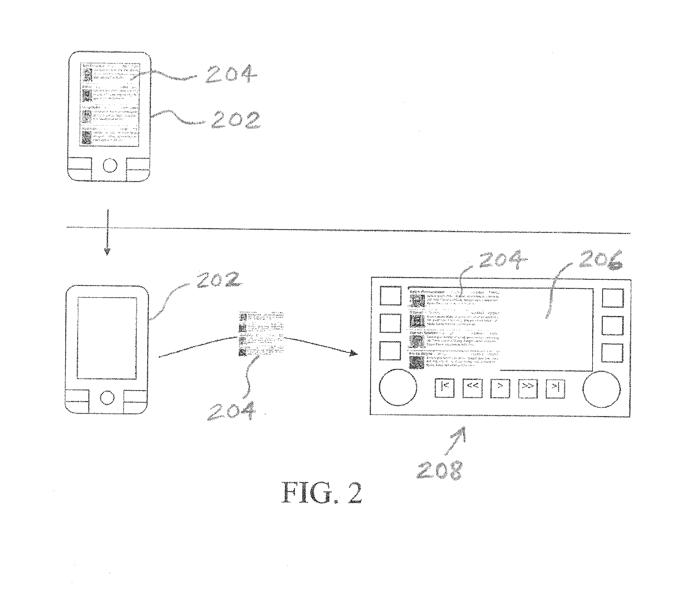

In another example use case, a TWITTER application on a user's phone 202 (FIG. 2) usually notifies her as soon as one of her friends sends a new message. According to a phone integration arrangement of the invention, however, notifications 204 may be managed by the car, and displayed on a display screen 206 of the car, as indicated at 208. The system may make sure that notifications are displayed only when the situation is appropriate. For example, the system may check the content being presented, and if it is determined that the application keeps the driver too busy (e.g., above a threshold length and/or percentage of time), or if there is too much going on the street (e.g., as determined by in-car sensors) for the driver's attention to be diverted by the application, then the system may automatically prevent further notifications 204 in order to avoid the user being distracted.

In yet another example use case, the invention may support dynamic selection of modalities. The phone integration arrangement of the invention may inform the driver whenever a new TWITTER message is received by the phone. The message may be automatically displayed on the screen of the driver information system and a sound may inform the driver about the new message so that he can quickly read the new message. In one embodiment, the phone integration arrangement also evaluates the traffic situation. For example, if the system decides that the driver needs to focus more visual attention to the street, then the system may automatically change the way the TWITTER message is presented. Instead of displaying the message on the screen, the system may play only the notification sound. In addition, the system may play a short voice dialog that asks the driver if he wants the system to read the message aloud (using a text-to-speech function). Only when the driver confirms with a voice command does the system start audibly reading the message. This dynamic selection of input and output modality may minimize the distraction of the driver in demanding driving scenarios.

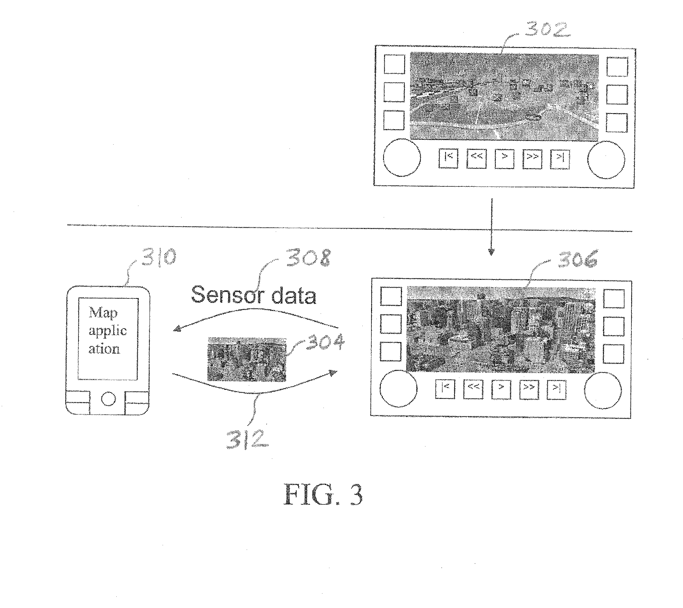

In a further example use case, the central processing unit (CPU) and graphics processing unit (GPU) of the phone may be used to increase the capabilities of the in-car system. Assume that the user drives a new car having a relatively powerful navigation system. However, it may be anticipated that in five years the system's computational power will be relatively low compared to newer systems. The limited computational power of the navigation system may restrict the system to displaying 2D maps, such as 2D map 302 illustrated in FIG. 3. Although the navigation system cannot easily display a 3D map, it may be anticipated that five years in the future, new, powerful phones may display a 3D map easily, such as 3D map 304. Further assume that his navigation system includes the phone connector feature of the present invention. Thus, in five years he may use a new, more powerful phone to upgrade and add new functionality to his car. For example, he may only have to install an application on his phone. Such an application may be available in the application store of his mobile phone marketer. After he installs and starts the application, it may automatically connect with his in-car navigation system. Instead of displaying the 2D map which has by then become old fashioned, his in-car navigation system may show a new map with 3D graphics provided by his new telephone, as indicated at 306. The car may send its sensor data 308 to phone 310, which creates a 3D graphic using its powerful GPU, and the resulting image may then be sent back to the car, as indicated at 312. Thus, the user will able to view 3D graphics on his old in-car navigation system, and he will not have to buy a new in-car navigation system.

In still another example use case, assume a user installs a new application on his phone. The new application uses the phone camera for "augmented reality." That is, the application takes live videos and superimposes text information about objects shown in the video images. Unfortunately, he cannot use the application in the car because the camera of the phone is obstructed when the phone is mounted to the windshield. But his car has a built-in camera, and the driver information system includes the phone interface of the invention. He installs the application of the invention on his phone, and the application enables him to exchange information between the phone and the car. By virtue of the inventive application, the video sensor in the car is accessible to the phone. The video images are sent to the phone and the "augmented reality" application uses the car camera instead of the phone's built-in camera. In addition, the output from the phone display is sent back to and displayed by the in-car display screen. Thus, the user can use his new "augmented reality" application while driving without the need to touch or look at the phone.

The present invention includes several novel features. A first such novel feature is that the invention enables remote control of a mobile phone from a car. The remote control interface may send content such as video and audio output from the mobile phone to the driver information system in the car. Thus, the driver does not have to operate the phone while driving and can use the regular input and output devices in the car. Instead of running applications in driver information systems, the applications may be run completely or partially on the mobile phone. The invention may enable regular applications running on the phone to be remotely controlled from the car without making changes to the applications. In addition, the system of the invention may seamlessly integrate the output of the application on the phone and may adjust the look and feel to make it appear to the driver as if the application was part of the driver information system.

A second novel feature of the invention is that input to devices in the driver information system and output to devices in the phone are captured. The input and output may be transformed to convert between different input/output devices on the phone and the driver information system. Transformation of phone output may employ content analysis techniques and content adaptation, such as change in font size of text, colors, removing elements. Input and output devices that may be supported include audio, video, haptic devices (e.g., vibrations, force feedback, other haptic feedback), etc. Transformation and content analysis may run either on the phone or in the driver information system.

A third novel feature of the invention is content- and context-based selection of an output device and a modality. The inventive system may decide which output devices in the car are to display the phone content. Depending on the content, the system may decide which output modality is best suited for its presentation (e.g., visual, audial, and/or haptic modalities). If several devices of the same modality are available, such as several display screens in an instrument cluster, center console, head-up display, and rear seat, respectively, the system may use the results of the content analysis process to choose the most appropriate output device.

A fourth novel feature of the invention is that the system may reduce and/or limit the phone output in order to prevent driver distraction. Based on content analysis techniques, the car may determine which information is output and which information is suppressed or delayed.

A fifth novel feature of the invention is that the functionality of the driver information system in the car can be extended without the need for installing new applications in the driver information system. That is, the user does not have to maintain software on two devices. Instead, applications that run on the phone can be used on the driver information system, and the user can benefit from a large selection of applications.

A sixth novel feature of the invention is that it may enable an upgrade of specific functionality of the driver information system, such as map display, by outsourcing computation tasks to the phone. The system may use the phone's processor, graphics card, internet connection and other hardware to increase the capabilities of the in-car system.

A seventh novel feature of the invention is that it may upgrade the map rendering of a navigation system by outsourcing the map calculation/rendering to a mobile phone. If a mobile phone is unavailable, map rendering may be performed by the driver information system. Such rendering by the driver information system may be limited in quality, but it may be thus ensured that the system also works without a mobile phone attached.

An eighth novel feature of the invention is that it may send video sensor information from the car to the mobile phone. Designated applications on the phone may use the video information to create video-based output, such as an augmented reality display with superimposed content. The result of the computation may be sent back to the car and displayed in the car.

A ninth novel feature of the invention is that most extensions are made on the phone side and additions to the driver information system are minimized. Thus, an existing driver information system deployed in the car can benefit from capabilities of new phone generations without having to make modifications to the existing driver information system. Hence, long term compatibility may be ensured.

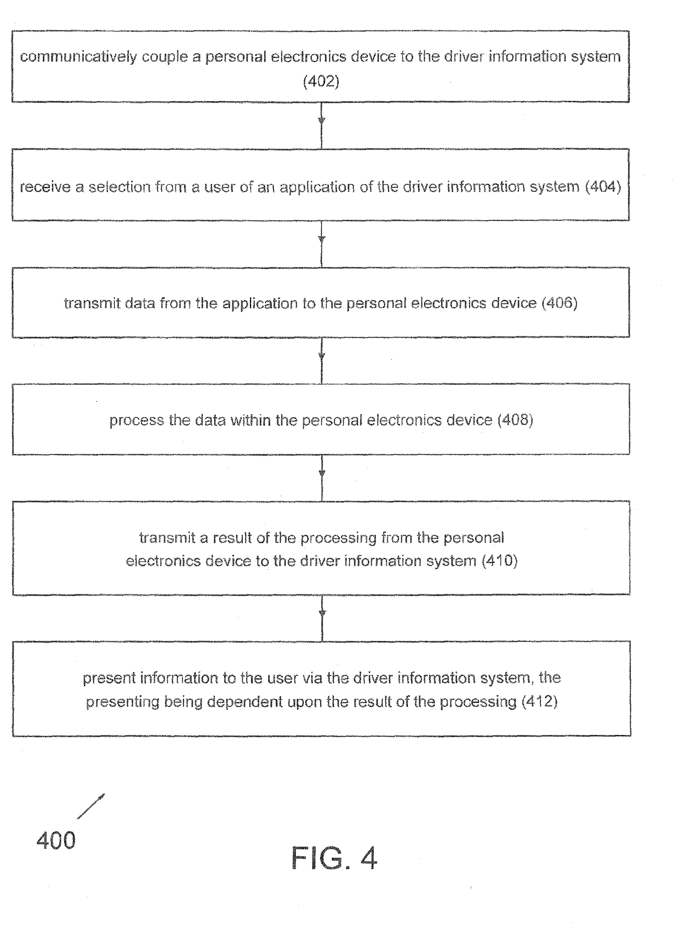

One embodiment of a method 400 of the present invention for operating a driver information system is illustrated in FIG. 4. In a first step 402, a personal electronics device is communicatively coupled to the driver information system. For example, a mobile telephone may be electrically connected via a cable to a driver information system of a vehicle.

In a next step 404, a selection is received from a user of an application of the driver information system. That is, a driver or other passenger of the vehicle may use pushbuttons, dials and/or switches, for example, on a user interface of the driver information system to select an application such as navigation or radio.

Next, in step 406, data is transmitted from the application to the personal electronics device. For example, in the case of the navigation application, the global position of the vehicle may be determined by use of GPS. This vehicle position may then be used to retrieve map data of the vicinity from a compact disc, for example. The map data may be transmitted from the navigation system to the mobile phone.

In step 408, the data is processed within the personal electronics device. In one example, the telephone produces a 3D map image based on processing of the received map data.

In a next step 410, a result of the processing is transmitted from the personal electronics device to the driver information system. That is, the 3D map image may be transmitted from the phone to the driver information system via the cable.

In a final step 412, information is presented to the user via the driver information system. The presentation is dependent upon the result of the processing. For example, the 3D map image received from the phone may be displayed on a display screen of the driver information system. It is possible that the image that is displayed is a modified version of the image received from the phone. That is, the received image may be modified to fit the size or some other parameter of the display screen. The received image may also be modified or simplified for display purposes so as not to distract the driver too much from his driving task. The level of burden that driving places on the driver's attention may be objectively quantified by a traffic video sensor, a vehicle speed sensor, etc.

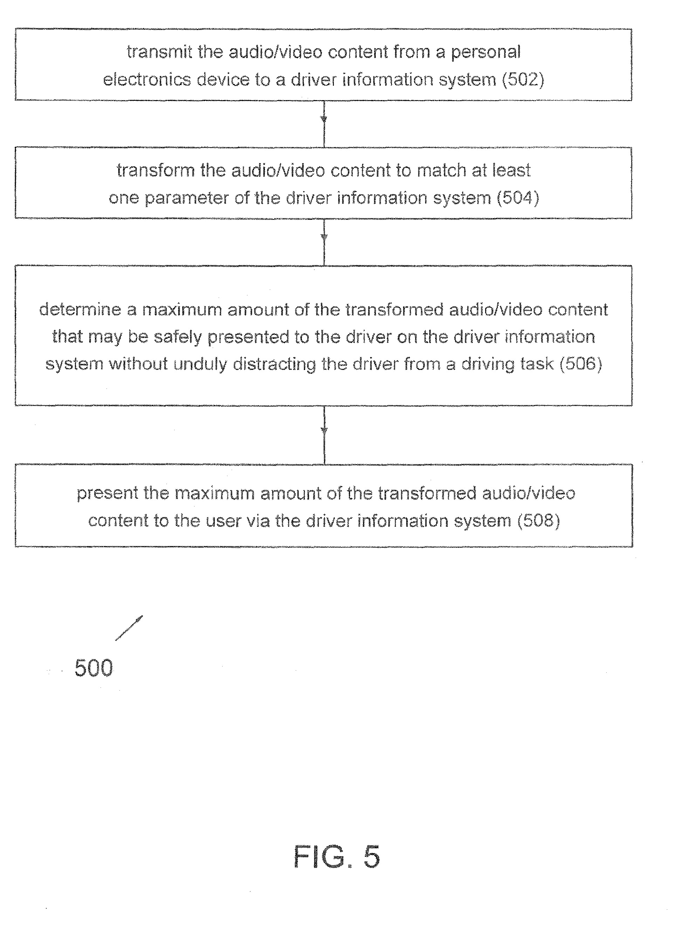

Another embodiment of a method 500 of the present invention for presenting audio/video content to a user is illustrated in FIG. 5. In a first step 502, the audio/video content is transmitted from a personal electronics device to a driver information system. For example, a mobile phone may be running a TWITTER application, and the audio/video content of the TWITTER application may be transmitted to a driver information system of a vehicle via a cable connection or wireless means.

In a next step 504, the audio/video content is transformed to match at least one parameter of the driver information system. For example, the video may be transformed such that it fits the size and aspect ratio of the screen of the driver information system. As another example, the video may be transformed such that it matches the look and feel of the driver information system display. For instance, the font size and color of text in the video may be changed to match the font size and color of text that is used in the display screen of the driver information system.

Next, in step 506, a maximum amount of the transformed audio/video content that may be safely presented to the driver on the driver information system without unduly distracting the driver from a driving task is determined. In one embodiment, an in-car video sensor is used to ascertain the volume of traffic surrounding the vehicle. A maximum amount of audio/video content that may be safely presented to the driver may be determined based on the current traffic volume. The vehicle speed may also be used as a proxy for the level of driver attention required for the driving task. The maximum amount of the transformed content may be defined by a percentage of the content that is actually displayed; by the relevancy of the content to the driving task; and/or by a frequency with which the content is updated.

In a final step 508, the maximum amount of the transformed audio/video content is presented to the user via the driver information system. That is, the content passing through the content filtering process of step 506 may be played on the audio speakers and/or video screen of the driver information system.

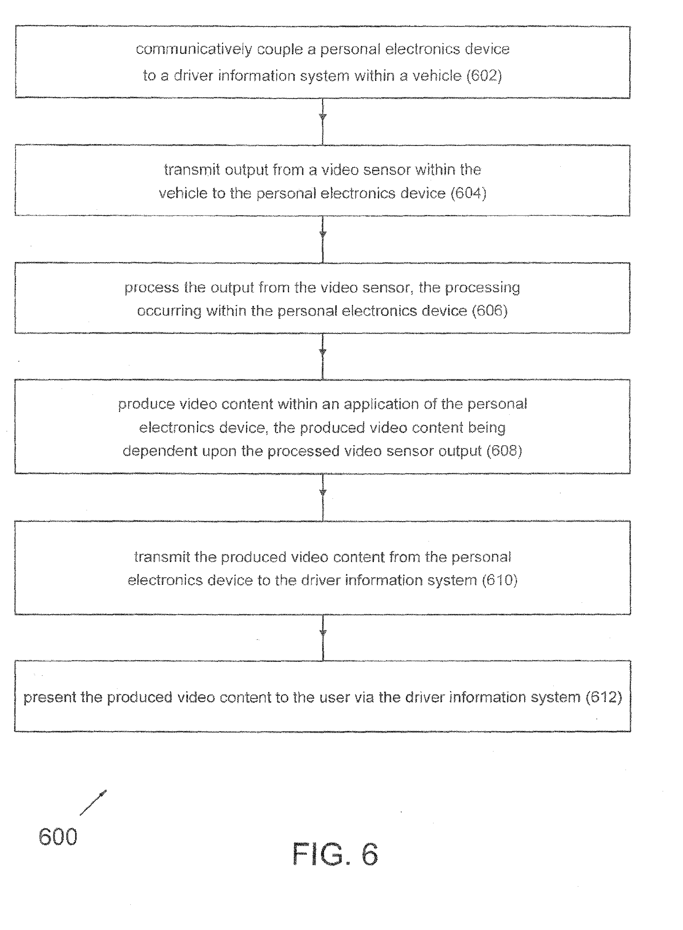

Yet another embodiment of a method 600 of the present invention for presenting video content to a user is illustrated in FIG. 6. In a first step 602, a personal electronics device is communicatively coupled to a driver information system within a vehicle. For example, a mobile telephone may be electrically connected via a cable to a driver information system of a vehicle.

In a next step 604, output from a video sensor within the vehicle is transmitted to the personal electronics device. For example, a video sensor in the vehicle may capture images of traffic in the vicinity of the vehicle. These captured images may be transmitted to the mobile phone.

Next, in step 606, the output from the video sensor is processed, the processing occurring within the personal electronics device. In one embodiment, the phone processes the traffic images in order to ascertain the volume of traffic surrounding the vehicle. An application for such traffic image processing may be loaded onto the phone in order to take advantage of the high level of computing power that may be available on the phone.

In step 608, video content is produced within an application of the personal electronics device. The produced video content may be dependent upon the processed video sensor output. For example, the phone may be running a TWITTER application, and video content may be produced within the phone including a stream of messages from friends. If the processed traffic images indicate that traffic is light, then the video content may include an unedited stream of the messages from friends. On the other hand, if the processed traffic images indicate that traffic is heavy, then the stream of the messages from friends may be edited to form the video content. In one embodiment, new messages are withheld from the presented video content until the traffic volume decreases. In another embodiment, the frequency at which new messages are presented to the user via video content is limited based upon current traffic volume. The maximum allowed frequency of the presentation of new messages may be inversely related to the detected traffic volume.

In a next step 610, the produced video content is transmitted from the personal electronics device to the driver information system. That is, continuing the example above, the edited or unedited stream of messages from friends may be transmitted from the phone to the driver information system wirelessly or via wired means.

In a final step 612, the produced video content is presented to the user via the driver information system. For example, the edited or unedited stream of TWITTER messages from friends may be displayed on a display screen of the driver information system. It is possible that the image that is displayed is a modified version of the image received from the phone. For example, the displayed image may be modified to fit the size or some other parameter of the display screen. The look and feel, font, and/or coloring of the displayed image may be modified to conform to that usually presented on the display screen of the driver information system.

While this invention has been described as having an exemplary design, the present invention may be further modified within the spirit and scope of this disclosure. This application is therefore intended to cover any variations, uses, or adaptations of the invention using its general principles.

## Claims

1. A method of operating a driver information system, comprising the steps of:
receiving a selection from a user of an application of the driver information system;
determining whether a personal electronics device is coupled to the driver information system;
if it is determined in the determining step that a personal electronics device is coupled to the driver information system, then the steps of:
transmitting data from the application to the personal electronics device;
processing the data within the personal electronics device; and
transmitting a result of the processing from the personal electronics device to the driver information system;
if it is determined in the determining step that a personal electronics device is not coupled to the driver information system, then the data is processed within the driver information system; and
presenting information to the user via the driver information system, the presenting being dependent upon the result of the processing.

2. The method of Claim 1 wherein the personal electronics device comprises a mobile phone.

3. The method of Claim 1 wherein the selected application is a navigation system application, the transmitted data comprises road map data, and the processing step comprises map rendering.

4. The method of Claim 1 wherein the result of the processing comprises an augmented reality display with superimposed content.

5. The method of Claim 1 comprising the further step of evaluating a volume of traffic near a vehicle in which the driver information system is installed, the information presented to the user being a simplified version of the transmitted result of the processing only if the volume of traffic exceeds a threshold level.

6. The method of Claim 1 comprising the further steps of:
receiving input from a user via an user interface of the driver information system;
transforming the received input to match capabilities of the personal electronics device;
and
transmitting the transformed input to the personal electronics device.

7. The method of Claim 1 comprising the further step of converting, within the personal electronics device, the result of the processing into an HTML format.

8. The method of Claim 1 wherein the result of the processing comprises audio/video content, the method comprising the further steps of:
transforming the audio/video content to match at least one parameter of the driver information system;
determining a maximum amount of the transformed audio/video content that may be safely presented to the driver on the driver information system without unduly distracting the driver from a driving task; and
presenting the maximum amount of the transformed audio/video content to the user via the driver information system.

9. The method of Claim 8 wherein the transforming step includes changing a font size of text, changing a color of text, and/or removing at least one portion of the audio/video content.

10. The method of Claim 9 wherein the at least one parameter of the driver information system comprises a font size of text and/or a color of text displayed on the driver information system.

11. The method of Claim 8 wherein the maximum amount of the content comprises a maximum frequency at which the content may be updated.

12. The method of Claim 8 wherein the maximum amount of the content comprises only content that is driving related.

13. The method of Claim 8 comprising the further steps of:
storing in memory an additional portion of the content that is not in the maximum amount of the content that is presented; and
presenting the additional portion of the content at a second time that is later than a first time at which the maximum amount of the content is presented, the second time being after determining that a traffic volume has decreased.

14. The method of Claim 1, wherein the data comprises output from a video sensor within the vehicle, the processing including producing video content within an application of the personal electronics device, the produced video content being dependent upon the processed video sensor output, the result of the processing including the produced video content, the presenting step including presenting the produced video content to the user via the driver information system, the produced video content including images superimposed over the output from the video sensor.

15. The method of Claim 14 wherein the processed video sensor output is indicative of a volume of vehicle traffic, an amount of the produced video content that is presented to the user, and/or a frequency at which the produced video content that is presented to the user is updated, being inversely related to the volume of vehicle traffic indicated by the processed video sensor output.
